# EUROPEAN PATENT APPLICATION

(11) **EP 4 651 435 A1**
(43) Date of publication of application: **19.11.2025**
(21) Application number: 24176130.3
(22) Date of filing: 15.05.2024
(51) Int. Cl.: H04L 9/40

(54) **PIN ENROLLMENT AND VERIFICATION METHOD**

(71) Applicant: Mastercard International Incorporated, Purchase, NY 10577 (US)
(72) Inventor: COLNOT, Cédric, 1180 Uccle (BE)
(74) Representative: Keltie LLP

(57) **Abstract**

A method (300, 400) of transmitting user verification data (328, 428) to a verification server (304), the method comprising, at a client device (302): receiving (110) a verification data request message (324, 424) from the verification server for the user verification data, the request message comprising an encrypted salt (330); receiving (120) a user input, the user input comprising the user verification data; decrypting (130) the encrypted salt; generating (140) salted user verification data (332, 432) in dependence on the received user input and decrypted salt; encrypting (150) the salted user verification data; and sending (160) the encrypted salted verification data (334, 434) to the verification server.

## Description

### TECHNICAL FIELD

The present disclosure relates to a PIN enrolment and verification method. In particular, the present disclosure relates to a method of transmitting user verification data to a verification server, a method of receiving, at a verification server, user verification data from a client device and a method of identifying a user at a verification server in the event of biometric collision during a user-initiated transaction.

### BACKGROUND

When a user is setting up a user account they may be required to set a user passphrase. For example, a user who is setting up a payment card may need to enter a Personal Identification Number (PIN) and a user setting up an online account may be asked for a PIN or other user knowledge such as an alphanumeric code or a natural language phrase. Such a passphrase may be requested during an enrolment process at an enrolment and verification server.

Similarly, during a verification process, such as during a transaction or while requesting entry to the online account, the passphrase may be requested for verification at the enrolment and verification server.

The client device where the user enters the PIN may be different for the enrolment and the verification processes and, as such, the passphrase entered by the user during enrolment and verification may be seen in clear by the server even if the passphrase is transmitted over a secure connection.

To protect the passphrase against brute force attack for instance, the server may compute a salted hash of the passphrase or a keyed salted hash (HMAC) of the passphrase to securely store it in its database (A salt may be added to the hashing process of the passphrase to firstly force uniqueness and mitigate hash table attacks, slowing down dictionary and brute-force attacks). The latter case relies on the secrecy of the secret key which requires a hardware security module (HSM) to ensure the key is not exposed.

Using a hardware security module (HSM) connected to the server to compute the keyed salted hash of the passphrase provides a stronger resistance to brute force attack than the salted hash of the passphrase, but the passphrase entered by the user is still exposed to the server.

Additionally, in the event the server is compromised, an attacker could use the HSM to conduct a brute force attack on the passphrase which would reduce the complexity of the attack to the same level as attacking just the salted hash.

One option for mitigating the above problem would be to establish a secure channel directly between the client device and the HSM that computes the keyed salted PIN to be stored by the server. However, this approach would require an HSM equivalent device on the client side or a secure key agreement between the client and the server HSM.

The present disclosure has been devised to mitigate or overcome at least some of the above-mentioned problems.

### SUMMARY OF THE DISCLOSURE

According to a first aspect of the present disclosure there is provided a method of transmitting user verification data to a verification server, the method comprising, at a client device: receiving a verification data request from the verification server for the user verification data, the request comprising an encrypted salt; receiving a user input, the user input comprising the user verification data; decrypting the encrypted salt; generating salted user verification data in dependence on the received user input and decrypted salt; encrypting the salted user verification data; and sending the encrypted salted verification data to the verification server.

The present disclosure provides a method of transmitting user verification data, e.g. a numeric code (PIN code), an alphanumeric code, a passphrase or any other user knowledge data to a verification server without exposing the user verification data to the server.

A user at a client device, such as the user's computer or smart device or a merchant device, receives a request from the server for the user verification data. The verification request is accompanied with a salt that has been encrypted by the verification server. The client device is configured to decrypt the salt and to receive a user input comprising the user verification data and then to generate salted user verification data that is then encrypted and sent to the server. It is noted that decryption of the encrypted salt in the verification request and the receipt of the user verification data may be occur in any order.

The verification data request from the verification server may be received in response to an enrolment request sent from the client device to the verification server to set up a user account at the server. The user may wish to enrol on the verification server and may send an enrolment request as part of a user account sign up process. The verification request may be generated and sent by the server in response to the enrolment request.

The user verification data may be associated with a user account at the verification server and the verification data request from server may be received following a user-initiated transaction at a merchant. Where the user has already enrolled at the verification server, the verification request may be sent in response to a user-initiated transaction. For example, the user may be undertaking a transaction at a merchant that provides a biometric checkout function and the verification server may randomly require the user to go through a verification process after a predetermined number of transactions. Alternatively, if the verification server is unable to verify the user on the basis of a biometric verification procedure then the server may send the verification request.

The user-initiated transaction may comprise a biometric payment process and the verification data request from the verification server may be received by the client device following an inconclusive biometric verification result.

Prior to receiving the verification data request from the verification server, the client device may establish a secure channel between the client device and the verification server.

The user verification data may comprise one or more of: a numeric code, an alphanumeric code or a passphrase or any other user knowledge data.

The salted user verification data may comprise user verification data in a salted hash format. The client device may be configured to use a hashing function when salting the user verification data. For example, the salt received from the verification server may be concatenated with the user verification data before being hashed. The salt may be hashed and then concatenated with the user verification data before being hashed again.

According to a second aspect of the present disclosure there is provided a method of receiving, at a verification server, user verification data from a client device, the method comprising: sending a request to the client device for the user verification data, the request comprising an encrypted salt; receiving encrypted salted verification data from the client device, the client device having salted the user verification data using the salt sent in the request; decrypting the encrypted salted user verification data. The verification server may encrypt a salt and send a request for a user's verification data, the request comprising the encrypted salt.

The salted user verification data may be stored, e.g. during an enrolment process, in a user account along with the salt. The verification server may be configured to generate the salt prior to sending the request to the client device. The method may comprise sending the request in response to an enrolment request received from the client device to the server.

The verification request may be sent following a checkout request received from the client device, the checkout request being associated with a user-initiated transaction at the client device at a merchant. Prior to sending the request to the client device, the server may retrieve the salt from the user account. The method may comprise: comparing the salted user verification data received from the client device following the checkout request with enrolment salted user verification data received during a user enrolment process and then determining a transaction approval decision based on the comparison between the enrolment salted user verification data and the checkout salted user verification data received during a user checkout process.

According to a further aspect of the present disclosure there is provided a method of identifying a user at a verification server in the event of biometric collision during a user-initiated transaction, the server comprising a plurality of user accounts, each user account being associated with a salt and salted user verification data, the method comprising: receiving, during the user-initiated transaction, user biometric verification data from a client device at a merchant; identifying potential verification matches from the received user biometric verification data to a first user account and a second user account; retrieving a first salt from the first user account; retrieving a second salt from the second user account; encrypting the first salt and the second salt; sending a request to the client device for user verification data, the request comprising the first encrypted salt and the second encrypted salt; receiving an encrypted response message from the client device, the response message comprising user verification data that has been salted using the first salt and user verification data that has been salted using the second salt; decrypting the response message to recover the user verification data salted using the first salt and user verification data salted using the second salt; comparing the salted user verification data from the response message to the salted user verification data stored in the first and second user accounts in order to identify the user taking part in the user-initiated transaction.

According to a further aspect of the present disclosure, there is provided a client device for transmitting user verification data to a verification server, the client device comprising: an input arranged to receive a verification data request from the verification server for the user verification data, the request comprising an encrypted salt, and arranged to receive a user input, the user input comprising the user verification data; a processor arranged to decrypt the encrypted salt to generate salted user verification data in dependence on the received user input and decrypted salt and to encrypt the salted user verification data; and an output arranged to send the encrypted salted verification data to the verification server.

According to a further aspect of the present disclosure, there is provided a verification server for receiving user verification data from a client device, the verification server comprising: a processor for generating a request for the user verification data, the request comprising an encrypted salt; an output arranged sending the request to the client device; an input arranged to receive encrypted salted verification data from the client device, the client device having salted the user verification data using the salt sent in the request; wherein the processor is arranged to decrypt the encrypted salted user verification data.

A computer program comprising instructions which, when the program is executed by a computer, cause the computer to carry out the method of the first or second aspects of the disclosure. A computer-readable medium comprising instructions which, when executed by a computer, cause the computer to carry out the method of the first or second aspects of the disclosure.

### BRIEF DESCRIPTION OF THE DRAWINGS

One or more embodiments of the disclosure will now be described, by way of example only, with reference to the accompanying drawings, in which:
Figure 1 shows the steps of enrolling user verification data at the server according to an embodiment of the disclosure;
Figure 2 shows the steps of verifying a user at the server according to an embodiment of the disclosure;
Figure 3 shows an enrolment process between a client device and a server according to an embodiment of the disclosure;
Figure 4 shows a verification process between a client device and a server according to an embodiment of the disclosure;
Figure 5 shows the steps of verifying a user at the server in the event an alternative verification method is inconclusive according to an embodiment of the disclosure.

### DETAILED DESCRIPTION

General and specific embodiments of the disclosure will be described below with reference to the Figures.

In accordance with embodiments of the present disclosure, user verification data may be a numeric code, e.g. a PIN, an alphanumeric code or passphrase or any other user knowledge data.

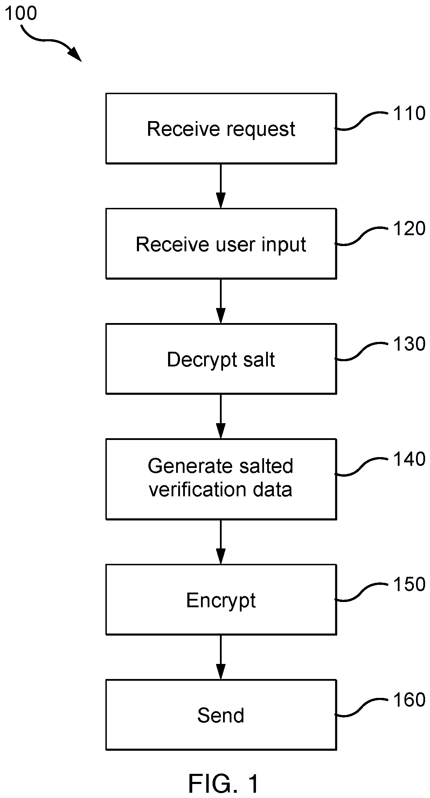

Figure 1 shows a method 100 of transmitting user verification data from a client device to a verification server according to an embodiment of the present disclosure. It is noted that in accordance with the method of Figure 1 the user verification data is sent in a salted format to the server.

In step 110, the client device receives a verification data request from the verification server for the user verification data, the request comprising an encrypted salt.

In step 120, the client device receives a user input, the user input comprising the user verification data and in step 130, the client device decrypts the encrypted salt. [It is noted that steps 120 and 130 may occur in opposite order or the two steps may occur substantially at the same time.]

In step 140 the client device generates salted user verification data in dependence on the received user input and decrypted salt.

In step 150 the client device encrypts the salted user verification data and in step 160 sends the encrypted salted verification data to the verification server.

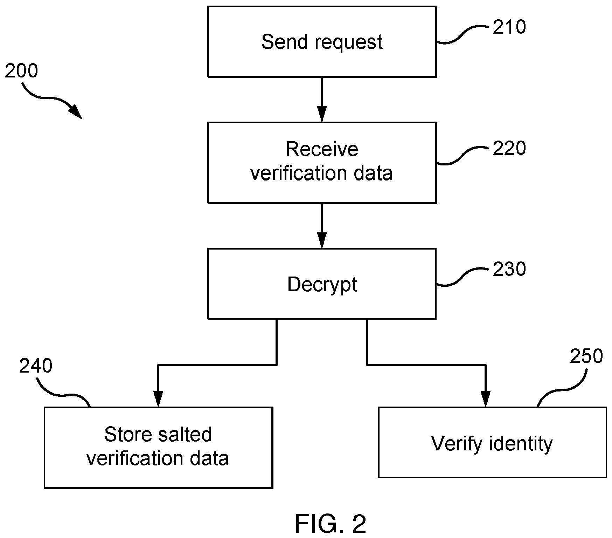

Figure 2 shows a method 200 of receiving, at a verification server, user verification data from a client device according to an embodiment of the present disclosure. It is noted that in accordance with the method of Figure 2 the user verification data is received in a salted format at the server.

In step 210, the verification server sends a verification data request to the client device for the user verification data. The verification data request message sent by the server also comprises an encrypted salt. The server may generate the salt if, for example, the method 200 relates to a user enrolment process. Alternatively, where the user is already enrolled with the server, the server may retrieve the salt stored in a user's account. In both instances the server encrypts the salt before transmission to the client device.

In step 220, the server receives encrypted salted verification data from the client device (the encrypted salted verification data having been generated and sent according to the steps of Figure 1 above).

In step 230 the encrypted salted user verification data is decrypted. In the event that the verification server is performing an enrolment activity then the salted user verification data may then be stored, in step 240, in a user account along with the salt that the server sent to the client device. In the event that the verification server is performing an identity verification activity then, in step 250, the salted user verification data may be used to confirm the identity of the user (by comparing it to the salted user verification data held in the user account).

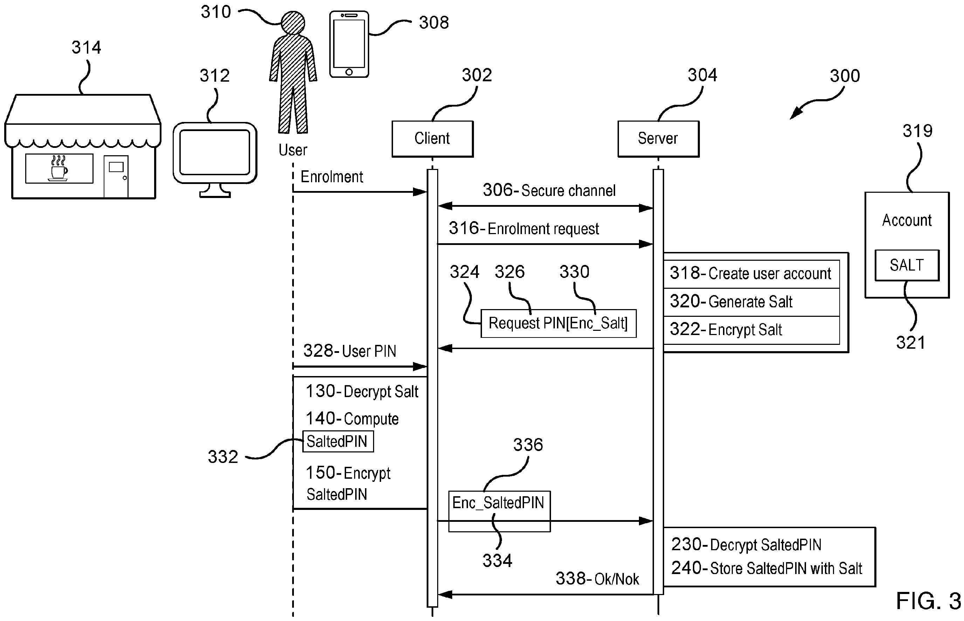

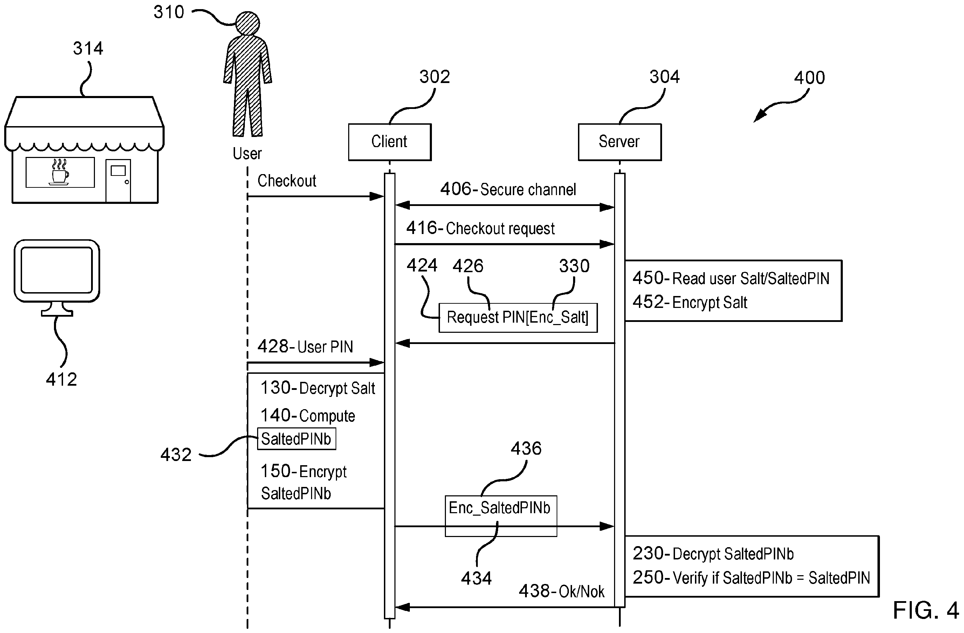

In the description relating to Figures 3 and 4 below, the user verification data takes the form of a numeric PIN code, herein referred to as a PIN. However, it is to be appreciated that the methods and systems below may use any suitable user verification data instead, e.g. an alphanumeric code or a passphrase or any other user knowledge data.

An enrolment process 300 between a client device 302 and a server 304 according to an embodiment of the disclosure is shown in Figure 3.

During enrolment a secure channel 306 is established between the client device 302 and the server 304. It is noted that the smartphone 308 or computer of the user 310, or a device 312 (kiosk) of a merchant 314 may act as the client device 302 in Figure 3.

The client device-server secure channel 306 in place may typically be implemented at the application level of the OSI model. Securing a channel at the application level between the client device and server is following agreement on an encryption key and method.

Once the secure channel has been established the user 310 sends, via the client device 302, an enrolment request message 316 to the server 304. It is noted that the enrolment may be in respect of the activation of a biometric checkout functionality to allow the user 310 to conduct transactions using only their biometrics. An example of a biometric checkout function is described at https://www.mastercard.com/news/press/2022/may/with-a-smile-or-a-wave-paying-in-store-just-got-personal/.

Following receipt of the enrolment request message 316, the server 304 creates 318 a user account 319. The server may associate payment card details with the user account at this stage so as to provide a payment means for the biometric checkout function. Additionally, other data such as user details, user bank account details, loyalty account details may be associated with the user account.

The server additionally generates 320 a salt 321 and then encrypts 322 the salt. A centralized random number generator at the server 304 ensures freshness of the salt (i.e. a unique salt is used for each PIN). The server then generates a response in the form of verification data request message 324 comprising a request 326 for user verification data 328 (their PIN in the embodiment of Figure 3) along with the encrypted salt 330. The verification data request message is then sent back to the client device (step 210 in Figure 2).

Upon receipt (step 110 of Figure 1) of the verification data request message 324 at the client device, the client device 302 decrypts (step 130 of Figure 1) the encrypted salt 330 and the user is prompted to enter their PIN (user verification data 328). It is noted that the PIN (user verification data 328) that the user sets at this point is not the PIN for a payment card but is a PIN for the user account that is being set up.

The client device 302 is then configured to calculate (step 140 in Figure 1) a salted PIN 332 and then to encrypt (step 150 in Figure 1) the salted PIN 332 and send (step 160 in Figure 1) the encrypted salted PIN 334 to the server (message 336 in Figure 3).

Upon receipt (step 220 in Figure 2) of the encrypted salted PIN 334, the server is configured to decrypt (step 230 in Figure 2) the salted PIN 332 and to store (step 240 in Figure 2) the salted PIN 332, along with the salt 321, in the user account 319.

The server 304 then sends a confirmation notification 338 to the client device 302 indicating whether the enrolment process has successfully been completed.

As noted above, the salt that is received by the client device is used to salt the PIN 328 that the user enters into the client device 302. In this way the PIN is obfuscated before being sent encrypted to the server 304.

The PIN salting above comprises adding a random piece of data (the salt) to the PIN before the client device runs a hashing algorithm in order to make the salted PIN unique (and harder to crack) and never expose the PIN in clear to the server.

Since the client device 302 is configured to generate the salted PIN 332 in a salted hash format in which both salting and hashing processes are used, even if two users choose the same PIN, completely different hashes are generated to prevent the passwords and user accounts from being compromised There are a number of ways in which the client device may be configured to generate the salted PIN.

In a first arrangement the client device may concatenate the user's PIN with the salt provided by the server and then to apply the hash function.

The ability of the salting and hashing to produce unique hashes for two different users is shown below.

### User 1

PIN = 123456
Salt 1 (provided by the server, e.g. in step 110 or 210 above, for user 1) = UKjLc11L
Salt 1 concatenated to PIN = UKjLc11L123456
Hash (SHA-256) of UKjLc11L123456 = 465abf409653fcbdf6072e7c984be780054616f8c5757b64d45880ef5e375dea
Salted PIN 1 = 465abf409653fcbd

### User 2

PIN = 123456
Salt 2 (provided by the server, e.g. in step 110 or 210 above, for user 2) = H9wTHXu7
Salt 2 concatenated to PIN = H9wTHXu7123456
Hash (SHA-256) of H9wTHXu7123456 = 8e8e4d6a30c3bc7b6a4818e530ec21c7b0c2062ed2d88328afea1f204f3a5ea1
Salted PIN 2 = 8e8e4d6a30c3bc7b

As can be seen above, even though the two users have chosen the same PIN, because the server has provided a unique salt for each user, the resultant salted PINs in salted hash format are different.

In an alternative arrangement, the client device may be configured to:
- Hash the salt to generate output 1
- Concatenate output 1 with the PIN and hash again.

Computing the salted PIN on the client device obfuscates the PIN to the server. As only the user knows the PIN, only the user at the client device can compute the salted PIN.

Figure 4 shows a verification process 400 between the client device 302 and the server 304 according to an embodiment of the disclosure.

The verification process 400 according to embodiments of the present disclosure may be used as a supplementary verification method to verify the identity of the user 310 in the event that a separate, primary biometric identification method has been inconclusive. For example, during a biometric identification checkout process being managed by the verification server 304, a user may experience "biometric collision" in which biometric data that the user has provided during the checkout process may have matched with the biometric data of multiple users.

Where a biometric identification method is used in a transaction, e.g. during a checkout process, there may be instances in which biometric data provided by the user (e.g. face scan or fingerprint scan) is not sufficient to identify the user. In the event of a such an issue with a biometric identification method, the verification process according to embodiments of the present disclosure may then be used to confirm that user's identity.

During the verification process according to embodiments of the present disclosure and as shown in Figure 4, a secure channel 406 is again established between the client device 302 and the server 304. It is noted that during checkout the client device 302 may be a merchant payment terminal 412. The client device-server secure channel 406 in place may again typically be implemented at the application level of the OSI model.

Once the secure channel 406 has been established the user sends, via the client device 302, a checkout request message 416 to the server.

Following receipt of the checkout request message 416, the server accesses the relevant user account 319 and retrieves 450 the salt 321 that was used during the enrolment process to generate the stored salted PIN 332. The server is then configured to encrypt 452 the salt.

The server 304 then generates a response in the form of verification data request message 424, the message comprising a request 426 for a PIN and the encrypted salt 330. The verification data request message 424 is then sent back to the client device 302.

Upon receipt (step 110 in Figure 1) of the verification data request message 424 at the client device 302, the client device 302 decrypts (step 130) the encrypted salt 330 and the user is prompted to enter (step 120) their PIN 428 (Note: the PIN in Figure 4 is denoted as 428 to distinguish it from the PIN 328 that was entered in Figure 3. In the event the user is verified below then it is understood that the actual value of PIN 428 equals PIN 328).

The client device 302 is then configured to calculate (step 140) a salted PIN 432 and then to encrypt (step 150) the salted PIN and send the encrypted salted PIN 434 to the server (message 436 in Figure 4).

Upon receipt of the encrypted salted PIN 434, the server is configured to decrypt (step 230) the received salted PIN 432 and to compare (step 250) this to the salted PIN 332 that was stored in the user account during the enrolment process 300.

If the received salted PIN 432 matches the stored salted PIN 332 then the server 304 is configured to send a verification message 438 indicating that the user is verified. If the received salted PIN 432 does not match the stored salted PIN 332 then the server is configured to send a notification message 438 to the client device indicating the verification has failed.

In the case of the biometric identification system (BIS) used to do biometric checkout (transaction approval based on user biometric identification) the PIN may be needed to distinguish potential users with similar biometric identification ("biometric collision").

At the checkout the verification server may read the salts and salted PINs corresponding to the users (2 for instance) having close biometric identification results and then send the encrypted salts to the client in a PIN request. The client device may then compute the salted PINs based on each received salt and return them encrypted to the server for comparison with the salted PINs from the two user accounts in order to identify the correct user (if any).

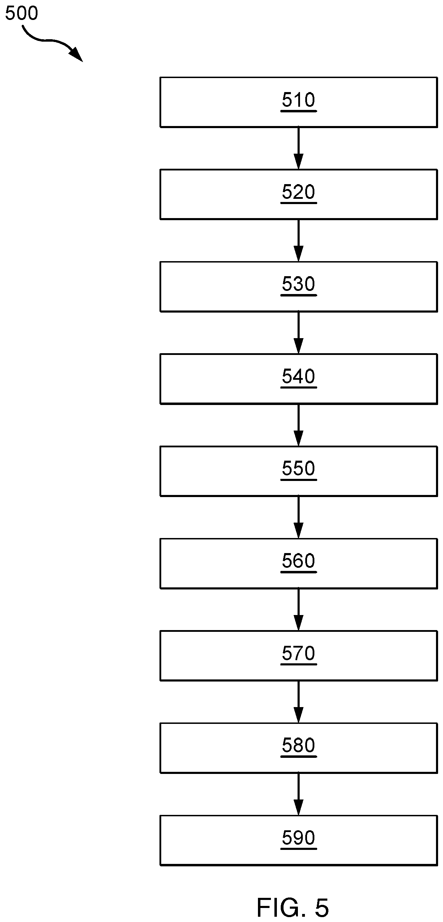

Figure 5 shows such a method 500 of identifying a user at a verification server 304 in the event of biometric collision during a user-initiated transaction according to an embodiment of the present disclosure.

In step 510, the server 304 receives, during the user-initiated transaction, a biometric verification data from a client device 302.

In step 520, the server 304 identifies potential verification matches from the received biometric verification data to a first user account and a second user account.

In step 530 the server 304 retrieves a first salt from the first user account and in step 540 retrieves a second salt from the second user account.

In step 550, the server 304 encrypts the first salt and the second salt and in step 560 sends a request to the client device for user verification data, the request comprising the first encrypted salt and the second encrypted salt.

In step 570, the server 304 receives an encrypted response message from the client device 302, the response message comprising user verification data that has been salted using the first salt and user verification data that has been salted using the second salt.

In step 580 the server 304 decrypts the response message to recover the user verification data salted using the first salt and user verification data salted using the second salt.

In step 590 the server 304 compares the salted user verification data from the response message to the salted user verification data stored in the first and second user accounts in order to identify the user taking part in the user-initiated transaction.

Further modifications may be made to the above examples without departing from the scope of the present disclosure as defined in the accompanying claims.

## Claims

1. A method (300, 400) of transmitting user verification data (328, 428) to a verification server (304), the method comprising, at a client device (302):
receiving (110) a verification data request message (324, 424) from the verification server for the user verification data, the request message comprising an encrypted salt (330);
receiving (120) a user input, the user input comprising the user verification data;
decrypting (130) the encrypted salt;
generating (140) salted user verification data (332, 432) in dependence on the received user input and decrypted salt;
encrypting (150) the salted user verification data; and
sending (160) the encrypted salted verification data (334, 434) to the verification server.

2. A method as claimed in Claim 1, wherein the verification data request message from the verification server is received in response to an enrolment request (316) sent from the client device to the verification server to set up a user account (319) at the server.

3. A method as claimed in Claim 1, wherein the user verification data is associated with a user account (319) at the verification server and the verification data request message from server is received following a user-initiated transaction at a merchant (314).

4. A method as claimed in Claim 3, wherein the user-initiated transaction comprises a biometric payment process and the verification data request message (424) from the verification server is received by the client device (302) following an inconclusive biometric verification result.

5. A method as claimed in any preceding claim, comprising, prior to receiving the verification data request message from the verification server, establishing a secure channel (306, 406) between the client device and the verification server.

6. A method as claimed in any preceding claim, wherein the user verification data (328, 428) comprises one or more of: a numeric code, an alphanumeric code or a passphrase.

7. A method as claimed in any preceding claim, wherein the salted user verification data (332, 432) comprises user verification data in a salted hash format.

8. A method of receiving, at a verification server (304), user verification data from a client device (302), the method comprising:
sending (210) a verification data request message (324, 424) to the client device for the user verification data, the request message comprising an encrypted salt;
receiving (220) encrypted salted verification data from the client device, the client device having salted the user verification data using the salt sent in the request;
decrypting (230) the encrypted salted user verification data.

9. A method as claimed in Claim 8, comprising storing (240) the salted user verification data in a user account along with the salt.

10. A method as claimed in Claim 8 or Claim 9, comprising generating a salt prior to sending the verification data request message to the client device.

11. A method as claimed in any of Claims 8 to 10, comprising sending the verification data request message in response to an enrolment request received from the client device to the server.

12. A method as claimed in Claim 8, comprising sending the verification data request message following a checkout request (416) received from the client device, the checkout request being associated with a user-initiated transaction at the client device at a merchant (314).

13. A method as claimed in Claim 12, comprising, prior to sending the verification data request message to the client device, retrieving the salt (321) from user account (319).

14. A method as claimed in Claim 12 or 13, comprising:
comparing (250) the salted user verification data received from the user device following the checkout request with enrolment salted user verification data received during a user enrolment process;
determining (250) a transaction approval decision based on the comparison between the enrolment salted user verification data and the checkout salted user verification data received during a user checkout process.

15. A method (500) of identifying a user at a verification server in the event of biometric collision during a user-initiated transaction, the server comprising a plurality of user accounts, each user account being associated with a salt and salted user verification data, the method comprising:
receiving (510), during the user-initiated transaction, user biometric verification data from a client device at a merchant;
identifying (520) potential verification matches from the received user biometric verification data to a first user account and a second user account;
retrieving (530) a first salt from the first user account;
retrieving (540) a second salt from the second user account;
encrypting (550) the first salt and the second salt;
sending (560) a request to the client device for user verification data, the request comprising the first encrypted salt and the second encrypted salt;
receiving (570) an encrypted response message from the client device, the response message comprising user verification data that has been salted using the first salt and user verification data that has been salted using the second salt;
decrypting (580) the response message to recover the user verification data salted using the first salt and user verification data salted using the second salt;
comparing (590) the salted user verification data from the response message to the salted user verification data stored in the first and second user accounts in order to identify the user taking part in the user-initiated transaction.
